# EUROPEAN PATENT SPECIFICATION

(11) **EP 2 496 046 B1**
(45) Date of publication and mention of the grant of the patent: **27.04.2016**
(21) Application number: 10841898.9
(22) Date of filing: 11.01.2010
(51) Int. Cl.: H04W 84/18

(54) **TWO-STAGE ADAPTIVE FREQUENCY HOPPING METHOD FOR A CLUSTERED WIRELESS SENSOR NETWORK**
ZWEISTUFIGES ADAPTIVES FREQUENZHOPPING-VERFAHREN FÜR EIN GEBÜNDELTES DRAHTLOSES SENSORENNETZWERK
PROCÉDÉ À SAUTS DE FRÉQUENCE ADAPTATIFS À DEUX STADES DESTINÉ À UN RÉSEAU DE CAPTEURS SANS FIL EN GRAPPE

(30) Priority: 08.01.2010 CN 201010010064
(43) Date of publication of application: 05.09.2012
(73) Proprietor: Shenyang Institute of Automation of the Chinese Academy of Sciences, Liaoning 110016 (CN)
(72) Inventor: LIANG, Wei, Shenyang Liaoning 110016 (CN); YU, Haibin, Shenyang Liaoning 110016 (CN); ZHANG, Xiaoling, Shenyang Liaoning 110016 (CN); YANG, Miao, Shenyang Liaoning 110016 (CN); XU, Weijie, Shenyang Liaoning 110016 (CN); WANG, Jun, Shenyang Liaoning 110016 (CN); ZENG, Peng, Shenyang Liaoning 110016 (CN)
(74) Representative: Office Kirkpatrick
(86) International application number: PCT/CN2010/070121
(87) International publication number: WO 2011/082554

(56) References cited:
- WO-A1-2006/049415
- CN-A- 101 193 042
- CN-A- 101 491 027
- US-A1- 2009 238 160
- "IEEE Standard for Information technology-- Local and metropolitan area networks-- Specific requirements-- Part 15.4: Wireless Medium Access Control (MAC) and Physical Layer (PHY) Specifications for Low Rate Wireless Personal Area Networks (WPANs);IEEE Std 802.15.4-2006 (Revision of IEEE Std 802.15.4", IEEE STANDARD, IEEE, PISCATAWAY, NJ, USA, 7 September 2006 (2006-09-07), pages 1-320, XP017694795, ISBN: 978-0-7381-4997-4
- ANDREAS WILLIG: "Recent and Emerging Topics in Wireless Industrial Communications: A Selection", IEEE TRANSACTIONS ON INDUSTRIAL INFORMATICS, IEEE SERVICE CENTER, NEW YORK, NY, US, vol. 4, no. 2, 1 May 2008 (2008-05-01), pages 102-124, XP011215124, ISSN: 1551-3203
- CHEN, DONGYAN: 'Multi-channel MAC protocols for wireless sensor networks: a survey' JOURNAL OF SHANDONG UNIVERSITY(ENGINEERING SCIENCE) vol. 39, no. 1, 28 February 2009, pages 41 - 49, XP008160335

## Description

The invention relates to a wireless communication technology, and more particularly to a method of two-stage adaptive frequency hopping for a clustered wireless sensor network.

Since 2Ist century, with the rapid development of disciplines, such as MEMS (Micro-Electro-Mechanism System), computer, communication, and automation control and artificial intelligence, a new type of monitoring and control networks - WSN (Wireless Sensor Network) comes into being.

WSN is an intelligent and autonomous monitoring and control network system, which consists of many ubiquitous tiny sensor nodes having communication and computing capabilities. These sensor nodes are densely planted in an unattended monitoring area and complete the assigned task according to the environment. WSN is a large scale, unattended, resource-limited distributed system and utilizes multi-hop peer communication, the network topology of which dynamically changes with self-organizing, autonomous, adaptive and other smart properties. If the Internet has changed the communication way among people, the WSN would merge the logical information world and the real physical world together, which will change the interaction way between people and nature. The emergence of WSNs has attracted worldwide attention.

In the aspect of network structure, WSNs have large scale. When the network size and convenience of the network management are taken into consideration, a cluster structure shall be the most common topology for WSNs In the aspect of communication protocols, IEEE 802.15.4 has many features compared with existing wireless communication standards, such as low energy consumption, low cost, easy use, and high flexibility, which make it a most promising under layer communication protocol for WSNs. Therefore, the communication method of this invention is based on IEEE 802.15.4. In the aspect of network performance, many applications, such as industrial and military applications, have higher requirement of network reliability. To overcome the serious interference problem during the wireless transmission and improve the network reliability, WSNs typically utilize frequency hopping mechanisms or adaptive frequency hopping mechanisms. However, existing IEEE 802.15.4 standard has no function of frequency hopping. Moreover, the multi-level adaptive frequency hopping technology for clustered WSNs that are based on IEEE 802.15.4 has not been reported until now.

US20090238160 relates to a channel access and scheduling of transmissions in a WSN including a coordinator node and a set of leaf nodes, a beacon defining a superframe, wherein the active period includes a first contention access period (CAP-1), a first contention free period (CFP-1), a first group acknowledgement (GACK-1), a second CFP-2, a second GACK-2, and a second CAP-2, and wherein each CFP includes a guaranteed time slot (GTS) assigned to each leaf node. Then each leaf node transmits to the coordinator node only during the GTS assigned to the leaf node during each CFP.

To overcome the shortages that existing IEEE 802.15.4 standard has no function of frequency hopping and the multi.-level adaptive frequency hopping technology for clustered WSNs that are based on IEEE 802.15.4 has not been reported until now, the technical problems for this invention to solve is to provide a method of two.-stage adaptive frequency hopping for a clustered wireless sensor network to improve the system reliability.

To solve the above technical problems, the adopted technical scheme in this invention is described below.

The invention provides a method of two-stage adaptive frequency hopping for a clustered wireless sensor network, comprising the steps of:
a) building a clustered wireless sensor network; wherein the clustered wireless sensor network comprises the following three kinds of nodes:
   a sink node, a cluster header node, and a cluster member node; and wherein cluster header nodes and cluster member node constitute clusters, wherein a cluster member node communicates with only one cluster header node, but not with each other and a cluster header node communicates with the sink node and other cluster header nodes;
b) defining a superframe structure based on IEEE 802.15.4;
c) performing a two-stage adaptive frequency hopping mechanism;
   wherein
   (i) said superframe structure is an extended superframe structure comprising a beacon frame period, a contention access period (CAP), a contention-free access period (CFP), and an inactive period comprising an intra-cluster communication period, an inter-cluster communication period, and a sleeping period;
      the beacon frame period is used for timeslot synchronization and superframe information publishing; the CAP is used for node adding and intra-cluster management, which realizes medium access control by a timeslot Carrier Sense Multiple Access with Collision Avoidance (CSMA/CA) algorithm;
      the CFP is used for emergency communications and communications among mobile cluster member nodes and cluster header nodes, which is distributed by cluster header nodes themselves; in the contention-free access period, communication is finished by using the Time Division Multiple Access (TDMA) mechanism;
      the intra-cluster communication period is the extension of the contention-free period and used for intra-cluster communication; the inter-cluster communication period is used for inter-cluster communication and management; and both the intra-cluster communication period and the inter-cluster communication period use TDMA to finish communication;
   (ii) said two-stage adaptive frequency hopping comprises a first stage period adaptive frequency hopping (PAFH) and a second stage timeslot adaptive frequency hopping (TAFH); wherein
      regarding period adaptive frequency hopping, in the superframe of a clustered WSN, the beacon period, contention access period, and contention-free access period use the same channel in the same superframe cycle, and change the channels according to the channel conditions in different superframe cycles; wherein
      when the channel condition is bad, the communication channel is changed by the nodes and the channel condition is evaluated by Packet Loss Rate (PLR) and retransmission times; and
      regarding timeslot adaptive frequency hopping, in the superframe of a clustered WSN, timeslots of intra-cluster communication period change the communication channel according to the channel condition; wherein
      when the channel condition is bad, the node changes the communication channel, the channel condition is evaluated by PLR and retransmission times.
   (iii) the beacon frame adopts the format of the beacon frame in the IEEE 802.15.4 MAC layer and the beacon frame payload is extended, wherein said extended beacon frame payload comprises cluster identifier, absolute timeslot number, and the channel used during the beacon period and the active period in the next superframe cycle;

Before the two-stage adaptive frequency hopping, the channel condition is measured. The channel measurement is used for offering the channel condition to the sink node and the cluster header node, helping the sink node and the cluster header node to allocate communication channel. A cluster member node or a cluster header node can measure one or more channel condition, and report the statistical information to the cluster header node or the sink node. The cluster member node transmits the measurement result collected from cluster member nodes to cluster header nodes, and a cluster header node transmits the channel condition collected from itself and from the cluster member nodes to the sink node.

In the process of channel measurement, each node records the conditions of all the channels that are used for communication with the node in the measurement period; the recorded performance information comprises packet loss rate and retransmission times; the packet loss rate is determined by the number of the acknowledgment frames (ACK) and the number of transmitted packets.

The realization process of PAFH is as follows:
1) First, the sink node allocates channels for each cluster header node's beacon period, CAP and CFP; if a cluster has more than one available channel, the cluster header node selects one channel for use and identifies other channels as alternate channels;
2) The cluster header node judges the operation termination of system; if the operation system is terminated, the program should be ended. Otherwise, the following steps are performed:
3) The cluster header node periodically initializes the statistics of the channel conditions;
4) The cluster header node records the channel conditions measured by itself and cluster member nodes;
5) The cluster header node determines whether the time is in the PAHF channel measuring cycle; if it is not, the following steps are performed;
6) The cluster header node determines whether the packet loss rate of current utilized channel is greater than a predetermined threshold; if the packet loss rate of current utilized channel is not less than the predetermined threshold, the cluster header node reports the former channel's condition to the sink node;
7) The cluster header node determines whether there is an alternate channel; if so, the cluster head node switches to the alternate channel;
8) The cluster header node broadcasts the next channel used by cluster member nodes in Beacon period, CAP and CFP of next superframe cycle by utilizing the beacon frame;
9) The cluster header nodes and the cluster member nodes take advantage of the replaced channel to communicate with each other; and

Return to system to determine whether the operation of the system should be terminated.

If there has no alternate channel, the sink node reallocates channels for the related cluster head node. Thereafter, the cluster header node broadcasts the next channel used by cluster member nodes in the beacon period, CAP and CFP of next superframe cycle by utilizing the beacon frame.

If the packet loss rate of current utilized channel is less than the predetermined threshold, the program returns to system to determine whether the operation of the system should be terminated.

If the time is in the PAHF channel measuring cycle, return to the step: the cluster header node records the channel conditions measured by itself and cluster member nodes.

If the operation system is terminated, the program should be ended.

That the cluster header node broadcasts the next channel used by cluster member nodes in the beacon period, CAP and CFP of next superframe cycle by utilizing the beacon frame wherein the beacon frame payload of IEEE 802.15.4 MAC is used to forecast the channel used in the next superframe cycle.
The beacon frame of this invention adopts the format of beacon frame in IEEE 802.15.4 MAC layer, and the payload has been extended. The extended beacon frame payload comprises cluster identifier, absolute timeslot number, and the channel used during the beacon period and the active period in the next superframe cycle.

For TAFH, this invention defines the following parameters: a channel switch threshold, the number of usable channels for intra-cluster communication, and an array to store all communication channels, which is allocated by the sink node to the cluster header node and the cluster member node.

The realization process of TAFH is as follows:
1) Initialize the channel allocation: the sink node pre-allocates *n* channels for each cluster member node, which are recorded in "an array to store all communication channels, which is allocated by the sink node to the cluster header node and the cluster member node"; one of these channels is denoted as "current available channel", and others are denoted as "alternate channel";
2) Judge the operation termination of system: if the operation system is terminated, the program should be ended; otherwise, the following steps are performed;
3) The statistics of channel conditions in the cluster header node and the cluster member nodes are set 0;
4) When the cluster header node and the cluster member node communicate with each other, both of them record the number of transmission failures while using the current available channel;
5) Determine whether the first communication on the current available channel is successful; if it is successful, the cluster header node and the cluster member node should synchronize the channel transmission failure count and set the channel transmission failure count to the smaller value;
6) Determine whether the statistical channel transmission failure count of either the cluster header node or the cluster member node equals to the value "channel switch threshold +2"; if not, the program goes to next step;
7) Determine whether the statistical channel transmission failure count of a transmitting node equals to channel switch threshold; if the statistical channel transmission failure count of the transmitting node equals to channel switch threshold, the transmitting node sends the channel switching notice that is carried by packets to a receiving node;
8) Determine whether the channel switching notice is sent successfully; if the channel switching notice is sent successfully, the receiver orderly selects the next channel from the array to store all communication channels, which is allocated by the sink node to the cluster header node and the cluster member node, to replace the communication channel, and returns ACK; and

Return to system to determine whether the operation of the system should be terminated.

Advantages of the invention are summarized as follows:
1. The invention employs the a clustered wireless sensor network, which extend the network size, reduce the difficulty of maintenance and management, and improve the flexibility of the system;
2. The invention designs a superframe structure based on IEEE 802.15.4, which makes full use of the advantages of IEEE 802.15.4, improves the system compatibility, protects the existing investments, and meets the application requirements by extending the superframe structure;
3. The invention proposes a two-stage frequency hopping method, which guarantees the compatibility with IEEE 802.15.4 and the system reliability by using a variety of methods;
4. The invention designs the adaptive frequency hopping method, which switches channels according to the channel condition and avoids blindness of traditional frequency hopping method; and
5. The invention designs the beacon frame payload based on IEEE 802.15.4 to forecast the communication channel. On the one hand, there is no need to design a special frame for broadcasting channel allocation results during the channel switching process, and the design of the large scale network will be simple; on the other hand, the number of control frames is reduced and the network throughput improved.

FIG. 1 is a schematic diagram of a typical clustered wireless sensor network;
FIG. 2 is a schematic diagram of an extended superframe structure based on IEEE 802.15.4;
FIG. 3 is a flow chart of a period adaptive frequency hopping process for a clustered wireless sensor network;
FIG. 4 is a schematic diagram of a beacon frame format based on IEEE 802.15.4;
FIG. 5 is a schematic diagram of a beacon frame payload based on IEEE 802.15.4; and
FIG. 6 is a flow chart of a timeslot adaptive frequency hopping for a clustered wireless sensor network.

The method of this invention is described combing the attached diagrams in detail.

The method of this invention comprises the following steps:
Building a clustered wireless sensor network;
Defining a superframe structure based on IEEE 802.15.4 according to the above topology;
Extending a beacon frame payload based on a beacon frame format of the IEEE 802.15.4 Media Access Control (MAC) layer; and
Performing a two-stage adaptive frequency hopping mechanism on nodes based on the above superframe structure and the extended beacon frame of the IEEE 802.15.4 MAC layer.

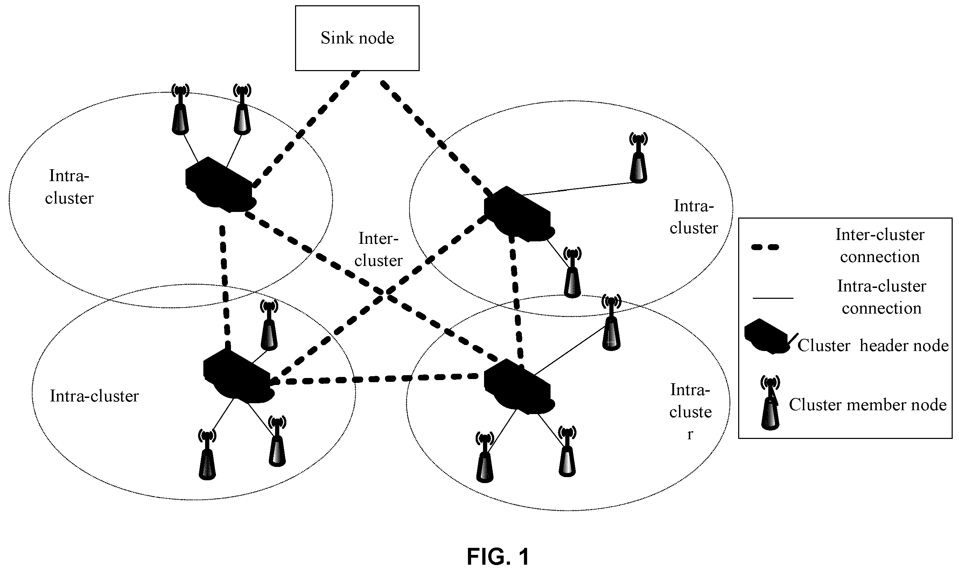

As shown in FIG. 1, this invention involves a clustered wireless sensor network, which comprises the following three kinds of nodes.

### 1) Sink node

Sink node is the convergence center of data and provides interfaces for clustered WSNs to connect with other WSNs. The Sink node in this invention refers to a single node used as monitoring and control clearing house. Sink node can connect with wired networks, such as Ethernet. Sink node is used to manage node joining, network formation, and network performance monitoring.

### 2) Cluster header node

A cluster header node is used to duplicate and forward data in a clustered WSN. The cluster header node can transmit or forward data to cluster member nodes, sink node, and other cluster header nodes in the network. The cluster header node can support any kinds of sensors and actuators.

### 3) Cluster member node

A cluster member node that is set up in industrial fields and connect with sensors and actuators are used for transmitting process measurement and control data and accomplishing specific applications.

FIG. 1 is a diagram of a typical clustered WSN. In this clustered WSN, cluster header nodes and cluster member nodes constitute clusters. Therein, a cluster member node communicates with only one cluster header node, but not with each other; a cluster header node communicates with the sink node and other cluster header nodes.

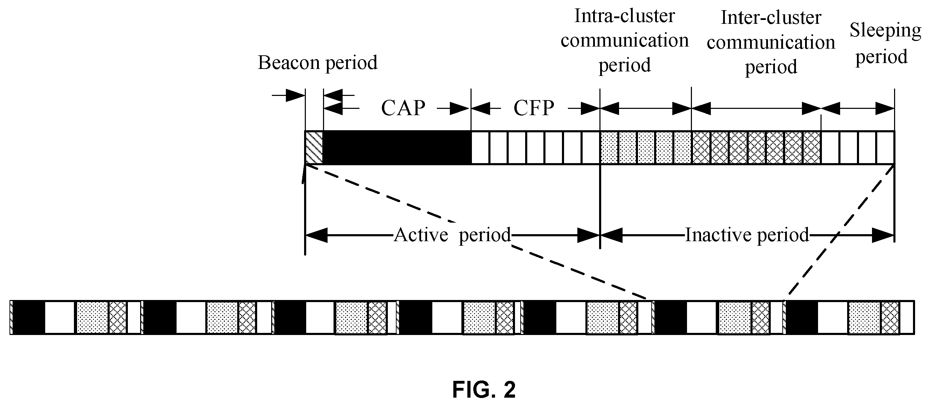

Among the present wireless communication standards, IEEE 802.15.4 has many features, such as low energy consumption, low cost, easy use, and high flexibility, which make it a most promising under layer communication protocol for WSNs. Therefore, the superframe structure in this invention is extended based on IEEE 802.15.4, as shown in FIG. 2, which is described as follows:
1) Beacon frame period is used for timeslot synchronization and superframe information publishing;
2) Contention Access Period (CAP) is used for node adding and intra-cluster management, which realizes medium access control by the timeslot Carrier Sense Multiple Access with Collision Avoidance (CSMA/CA) algorithm;
3) Contention-Free Period (CFP) is used for emergency communications and communications among mobile cluster member nodes and cluster header nodes, which is distributed by cluster header nodes themselves. In contention-free access period, communication is finished by using the Time Division Multiple Access (TDMA) mechanism; and
4) The inactive period comprises intra-cluster communication period, inter-cluster communication period, and sleeping period, which is used for intra-cluster communication, inter-cluster communication, and sleeping. These periods are uniformly allocated by the sink node. The intra-cluster communication period is the extension of the CFP and is used for intra-cluster communication; the inter-cluster communication period is used for inter-cluster communication and management. The intra-cluster communication period and the inter-cluster communication period use TDMA to finish communication.

The intra-cluster communication means communication between the cluster header node and the cluster member node; the inter-cluster communication means communication among the cluster header nodes and communication between the cluster header node and the sink node.

For a clustered WSN, this invention designs a two-stage adaptive frequency hopping method: the first stage is the Period Adaptive Frequency Hopping (PAFH), and the second stage is the Timeslot Adaptive Frequency Hopping (TAFH).
1) Period adaptive frequency hopping (PAFH): in the superframe of a clustered WSN, the beacon period, contention access period, and contention-free access period use the same channel in the same superframe cycle, and change the channels according to the channel conditions in different superframe cycles. When the channel condition is bad, the communication channel is changed by the nodes. The channel condition is evaluated by Packet Loss Rate (PLR) and retransmission times.
2) Timeslot adaptive frequency hopping (TAFH): in the superframe of a clustered WSN, timeslots of intra-cluster communication period change the communication channel according to the channel condition; when the channel condition is bad, the node changes the communication channel. The channel condition is evaluated by PLR and retransmission times.

For PAFH and TAFH, the channel condition should be measured. The channel measurement is used for offering the channel condition to the sink node and the cluster header node, helping the sink node and the cluster header node to allocate communication channel. A cluster member node (or a cluster header node) can measure one or more channel condition, and report the statistical information to the cluster header node (or the sink node). The cluster member node transmits the measurement result collected from cluster member nodes to cluster header nodes, and a cluster header node transmits the channel condition collected from itself and from the cluster member nodes to the sink node.

In the process of channel measurement, each node records the conditions of all the channels that are used for communication with the node in the measurement period; the recorded performance information comprises packet loss rate and retransmission times; The packet loss rate are determined by the number of the acknowledgment frames (ACK) and the number of transmitted packets.

The realization of PAFH and TAFH is explained in details as follows.

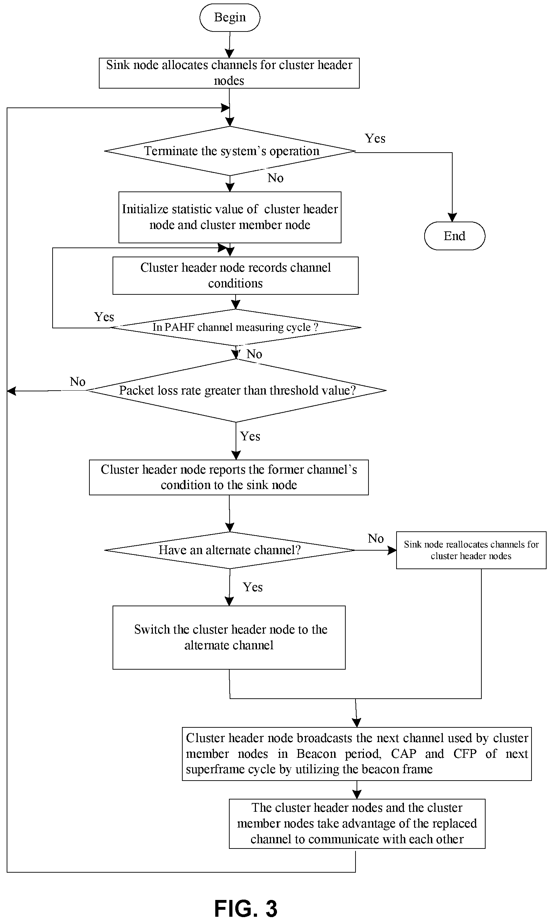

As shown in FIG. 3, the realization process of PAFH is as follows:
1) At first, the sink node allocates channels for each cluster header node's beacon period, CAP and CFP; if a cluster has more than one available channel, the cluster header node selects one channel for use and identifies other channels as alternate channels;
2) The cluster header node judges the operation termination of system; if the operation system is terminated, the program should be ended; otherwise, the following steps are performed;
3) The cluster header node periodically initializes the statistics of the channel conditions;
4) The cluster header node records the channel conditions measured by itself and cluster member nodes;
5) The cluster header node determines whether the time is in the PAHF channel measuring cycle; if it is, the program returns to Step 4; otherwise, the following steps are performed;
6) The cluster header node determines whether the packet loss rate of current utilized channel is greater than the predetermined threshold; if the packet loss rate of current utilized channel is not less than the predetermined threshold, the cluster header node reports the former channel's condition to the sink node; otherwise, the program returns to Step 2;
7) The cluster header node determines whether there has an alternate channel; If so, the cluster head node switches to the alternate channel; if the measured quality of all channels in a cluster is lower than the threshold value, and there has no an alternate channel, the sink node reallocates channels for the related cluster head node; and
8) The cluster header node broadcasts the next channel used by cluster member nodes in Beacon period, CAP and CFP of next superframe cycle by utilizing the beacon frame.
9) The cluster header nodes and the cluster member nodes take advantage of the replaced channel to communicate with each other.

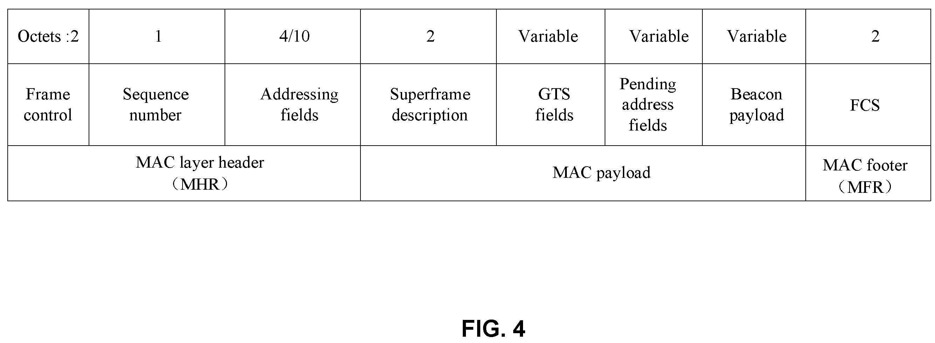

For PAFH, the beacon frame in the former superframe cycle is used to forecast the channel used in latter superframe cycle. The format of the beacon frame is shown in FIG. 4. The beacon frame of this invention adopts the format of beacon frame in IEEE 802.15.4 MAC layer. The detailed parameters refer to IEEE 802.15.4-2006 standard.

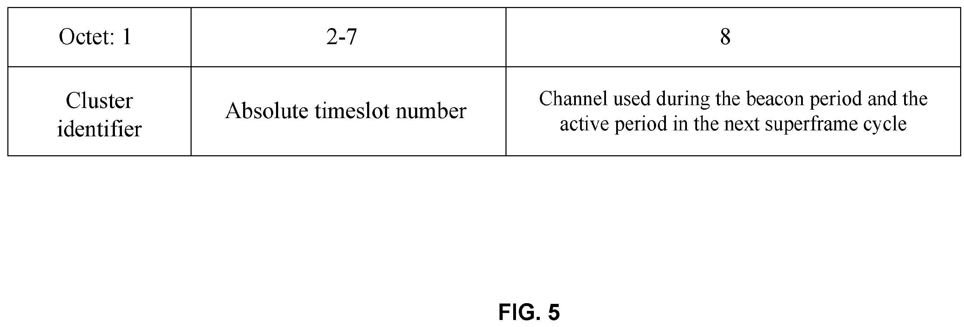

The invention makes use of the beacon frame payload of IEEE 802.15.4 MAC to forecast the channel used in the latter superframe cycle. As shown in FIG. 5, the beacon frame payload specifically comprises the following parameters: cluster identifier, absolute timeslot number, and the channel used during the beacon period and the active period in the next superframe cycle.

For TAFH, this invention defines the following parameters, which is shown in Table 1.

**Table 1 Parameter definitions of TAFH**

| Parameter name | Default Value | Description |
|---|---|---|
| ChannelThreshoId | 1 | The channel switch threshold in adaptive frequency hopping, denoted as retransmission count during one channel measurement cycle. |
| IntraChannelNum | 1 | The number of usable channels for intra-cluster communication |
| IntraChanel[ ] | 0 | An array to store all communication channels, which is allocated by the sink node to the cluster header node and the cluster member node. The size of the array is *IntraChannelNum.* |

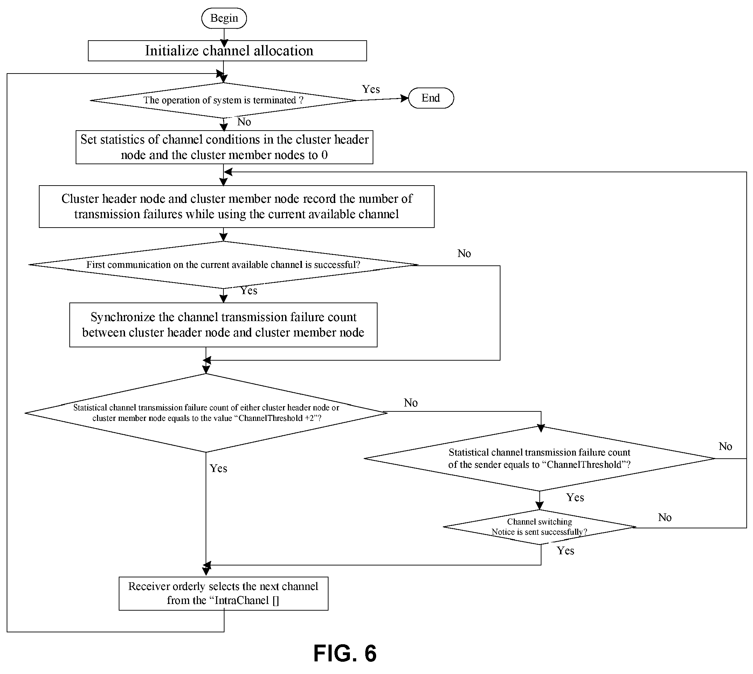

As shown in FIG. 6, the realization process of TAFH is as follows:
1) Initialize the channel allocation: the sink node pre-allocates *n* channels for each cluster member node, which are recorded in "IntraChanel[ ]"; one of these channels is denoted as "current available channel", and others are denoted as "alternate channel";
2) Judge the operation termination of system: if the operation system is terminated, the program should be ended; otherwise, the following steps are performed;
3) The statistics of channel conditions in the cluster header node and the cluster member nodes are set 0;
4) When the cluster header node and the cluster member node communicate with each other, both of them record the number of transmission failures while using the current available channel;
5) Determine whether the first communication on the current available channel is successful; if it is successful, the cluster header node and the cluster member node should synchronize the channel transmission failure count and set the channel transmission failure count to the smaller value; otherwise, the program goes to Step 6;
6) Determine whether the statistical channel transmission failure count of either the cluster header node or the cluster member node equals to the value "ChannelThreshold +2"; if the statistical channel transmission failure count of either the cluster header node or the cluster member node equals to the value "ChannelThreshold +2", the program goes to Step 7; otherwise, the cluster header node and the cluster member node select the next channel from the "IntraChanel []" for next communication;
7) Determine whether the statistical channel transmission failure count of the sender equals to "ChannelThreshold"; if the statistical channel transmission failure count of the transmitting node equals to "ChannelThreshold", the sender sends the channel switching notice that is carried by packets to the receiver; otherwise, the program returns to step 4; and
8) Determine whether the channel switching notice is sent successfully; If the channel switching notice is sent successfully, the receiver orderly selects the next channel from the "IntraChanel [] to replace the communication channel, and returns ACK; if the channel switching notice is not sent successfully, that is to say, either the receiver does not receive the notice to switch the channel, or the sender does not receive ACK, the program returns to step 4.

## Claims

1. A method of two-stage adaptive frequency hopping for a clustered wireless sensor network WSN, comprising the steps of:
a)building a clustered wireless sensor network; wherein the clustered wireless sensor network comprises the following three kinds of nodes: a sink node, a cluster header node, and a cluster member node; and wherein cluster header nodes and cluster member nodes constitute clusters, wherein
a cluster member node communicates with only one cluster header node, but not with each other and a cluster header node communicates with the sink node and other cluster header nodes;
b) defining a superframe structure based on IEEE 802.15.4;
c)performing a frequency hopping mechanism **characterized in that**
the frequency hopping mechanism is a two stage adaptive frequency hopping mechanism, and
(i) said superframe structure is an extended superframe structure comprising a beacon frame period, a contention access period, a contention-free access period, and an inactive period comprising an intra-cluster communication period, an inter-cluster communication period, and a sleeping period; wherein the beacon frame period is used for timeslot synchronization and superframe information publishing; the contention access period is used for node adding and intra-cluster management, which realizes medium access control by a timeslot Carrier Sense Multiple Access with Collision Avoidance algorithm; the contention-free period is used for emergency communications and communications among mobile cluster member nodes and cluster header nodes, which is distributed by cluster header nodes themselves; in the contention-free access period, communication is finished by using the Time Division Multiple Access mechanism; the intra-cluster communication period is the extension of the contention-free period and used for intra-cluster communication; the inter-cluster communication period is used for inter-cluster communication and management; and both the intra-cluster communication period and the inter-cluster communication period use TDMA to finish communication;
(ii) said two-stage adaptive frequency hopping comprises a first stage period adaptive frequency hopping PAFH and a second stage timeslot adaptive frequency hopping TAFH; wherein regarding period adaptive frequency hopping, in the superframe of a clustered WSN, the beacon period, contention access period, and contention-free access period use the same channel in the same superframe cycle, and change the channels according to the channel conditions in different superframe cycles; wherein when the channel condition is bad, the communication channel is changed by the nodes and the channel condition is evaluated by Packet Loss Rate PLR and retransmission times; and regarding timeslot adaptive frequency hopping, in the superframe of a clustered WSN, timeslots of intra-cluster communication period change the communication channel according to the channel condition; wherein when the channel condition is bad; the node changes the communication channel; the channel condition is evaluated by PLR and retransmission times;
(iii) the beacon frame adopts the format of the beacon frame in the IEEE 802.15.4 MAC layer and the beacon frame payload is extended, wherein said extended beacon frame payload comprises cluster identifier, absolute timeslot number, and the channel used during the beacon period and the active period in the next superframe cycle.

2. The method of claim 1, wherein
before the two-stage adaptive frequency hopping, the channel condition is measured;
the channel measurement is used for offering the channel condition to the sink node and the cluster header node, helping the sink node and the cluster header node to allocate communication channel;
a cluster member node or a cluster header node can measure one or more channel condition, and report the statistical information to the cluster header node or the sink node; and
the cluster member node transmits the measurement result collected from cluster member nodes to cluster header nodes, and a cluster header node transmits the channel condition collected from itself and from the cluster member nodes to the sink node.

3. The method of claim 2, wherein
in the process of channel measurement, each node records the conditions of all the channels that are used for communication with the node in the measurement period;
the recorded performance information comprises packet loss rate and retransmission times; and
the packet loss rate is determined by the number of the acknowledgment frames and the number of transmitted packets.

4. The method of claim 1, wherein the realization process of PAFH is as follows:
(1) first, the sink node allocates channels for each cluster header node's beacon period, contention access period and contention-free period,; if a cluster has more than one available channel, the cluster header node selects one channel for use and identifies other channels as alternate channels;
(2) the cluster header node judges the operation termination of system; if the operation system is terminated, the program should be ended; otherwise, the following steps are performed;
(3) the cluster header node periodically initializes the statistics of the channel conditions;
(4) the cluster header node records the channel conditions measured by itself and cluster member nodes;
(5) the cluster header node determines whether the time is in the PAHF channel measuring cycle; if it is not, the following steps are performed;
(6) the cluster header node determines whether the packet loss rate of current utilized channel is greater than a predetermined threshold;
if the packet loss rate of current utilized channel is not less than the predetermined threshold, the cluster header node reports the former channel's condition to the sink node;
(7) the cluster header node determines whether there is an alternate channel; if so, the cluster head node switches to the alternate channel;
(8) the cluster header node broadcasts the next channel used by cluster member nodes in the beacon period, contention access period and contention-free period of next superframe cycle by utilizing the beacon frame;
(9) the cluster header nodes and the cluster member nodes take advantage of the replaced channel to communicate with each other; and
(10) return to system to determine whether the operation of the system should be terminated.

5. The method of claim 4, wherein
if there has no alternate channel, the sink node reallocates channels for the related cluster head node; and
the cluster header node broadcasts the next channel used by cluster member nodes in the beacon period, contention access period and contention-free period, of next superframe cycle by utilizing the beacon frame.

6. The method of claim 4, wherein
if the packet loss rate of current utilized channel is less than the predetermined threshold, the program returns to system to determine whether the operation of the system should be terminated;
if the time is in the PAHF channel measuring cycle, return to the step: the cluster header node records the channel conditions measured by itself and cluster member nodes; and
if the operation system is terminated, the program should be ended.

7. The method of claim 4, wherein the cluster header node broadcasts the next channel used by cluster member nodes in the beacon period, contention access period and contention-free period, of next superframe cycle by utilizing the beacon frame wherein the extended beacon frame payload of IEEE 802.15.4 MAC is used to forecast the channel used in the next superframe cycle.

8. The method of claim 1, wherein the TAFH comprises the following parameters: a channel switch threshold, the number of usable channels for intra-cluster communication, and an array to store all communication channels, which is allocated by the sink node to the cluster header node and the cluster member node.

9. The method of claim 1, wherein the realization process of TAFH is as follows:
(1) initialize the channel allocation: the sink node pre-allocates n channels for each cluster member node, which are recorded in an array to store all communication channels, which is allocated by the sink node to the cluster header node and the cluster member node; one of these channels is denoted as current available channel, and others are denoted as alternate channel;
(2)judge the operation termination of system: if the operation system is terminated, the program should be ended; otherwise, the following steps are performed;
(3)the statistics of channel conditions in the cluster header node and the cluster member nodes are set 0;
(4)when the cluster header node and the cluster member node communicate with each other, both of them record the number of transmission failures while using the current available channel;
(5)determine whether the first communication on the current available channel is successful; if it is successful, the cluster header node and the cluster member node should synchronize the channel transmission failure count and set the channel transmission failure count to the smaller value;
(6)determine whether the statistical channel transmission failure count of either the cluster header node or the cluster member node equals to the value "channel switch threshold +2"; if not, the program goes to next step;
(7)determine whether the statistical channel transmission failure count of a transmitting node equals to channel switch threshold; if the statistical channel transmission failure count of the transmitting node equals to channel switch threshold, the transmitting node sends the channel switching notice that is carried by packets to a receiving node; and
(8)determine whether the channel switching notice is sent successfully; if the channel switching notice is sent successfully, the receiving node orderly selects the next channel from the array to store all communication channels, which is allocated by the sink node to the cluster header node and the cluster member node, to replace the communication channel, and returns acknowledgement; and return to system to determine whether the operation of the system should be terminated.

## Patentansprüche

1. Verfahren eines zweistufigen adaptiven Frequenzspringens für ein gebündeltes drahtloses Sensornetz (wireless sensor network, WSN), das die folgenden Schritte umfasst:
a) Bilden eines gebündelten drahtlosen Sensornetzes; wobei das gebündelte drahtlose Sensornetz die folgenden drei Arten von Knoten umfasst: einen Sink-Knoten, einen Bündel-Einstiegsknoten und einen Bündel-Mitgliedsknoten; und wobei die Bündel-Einstiegsknoten und die Bündel-Mitgliedsknoten Bündel bilden, wobei
ein Bündel-Mitgliedsknoten mit lediglich einem Bündel-Einstiegsknoten kommuniziert, jedoch nicht miteinander, und ein Bündel-Einstiegsknoten mit dem Sink-Knoten und anderen Bündel-Einstiegsknoten kommuniziert;
b) Definieren einer Superrahmenstruktur basierend auf IEEE 802.15.4;
c) Durchführen eines Frequenzspringmechanismus,
**dadurch gekennzeichnet, dass**
der Frequenzspringmechanismus ein zweitstufiger adaptiver Frequenzspringmechanismus ist, und
i) die Superrahmenstruktur eine erweiterte Superrahmenstruktur ist, die eine Bakenrahmendauer, eine Konfliktzugangsdauer, eine konfliktfreie Zugangsdauer und eine inaktive Dauer umfasst, die eine Intra-Bündel-Kommunikationsdauer, eine Inter-Bündel-Kommunikationsdauer und eine Schlafdauer umfasst; wobei die Bakenrahmendauer zur Zeitschlitz-Synchronisation und zur Superrahmen-Informationsveröffentlichung verwendet wird; wobei die Konfliktzugangsdauer zum Hinzufügen von Knoten und zur Intra-Bündel-Verwaltung verwendet wird, die eine Mediumzugangssteuerung über einen Zeitschlitz-Algorithmus eines Mehrfachzugriffs mit Trägererkennung und Kollisionsvermeidung realisiert; wobei die konfliktfreie Dauer für Notkommunikationen und Kommunikationen zwischen mobilen Bündel-Mitgliedsknoten und Bündel-Einstiegsknoten verwendet wird, die von Bündel-Einstiegsknoten selbst verteilt wird; wobei in der konfliktfreien Zugangsdauer die Kommunikation unter Verwendung des Mechanismus des Zeitmultiplexvielfachzugriffs abgeschlossen wird; wobei die Intra-Bündel-Kommunikationsdauer die Erweiterung der konfliktfreien Dauer ist und für Intra-Bündel-Kommunikation verwendet wird; wobei die Inter-Bündel-Kommunikationsdauer für Inter-Bündel-Kommunikation und -Verwaltung verwendet wird; und sowohl die Intra-Bündel-Kommunikationsdauer als auch die Inter-Bündel-Kommunikationsdauer TDMA (time division multiple access, Zeitmultiplexvielfachzugriff) zum Abschließen von Kommunikation verwenden;
ii) das zweistufige adaptive Frequenzspringen als erste Stufe ein Dauer-adaptives Frequenzspringen PAFH (period adaptive frequency hopping) und als zweite Stufe ein Zeitschlitzadaptives Frequenzspringen TAFH (timeslot adaptive frequency hopping) umfasst; wobei beim Dauer-adaptiven Frequenzspringen im Superrahmen eines gebündelten WSN die Bakendauer, die Konfliktzugangsdauer und die konfliktfreie Zugangsdauer denselben Kanal in demselben Superrahmenzyklus verwenden und die Kanäle gemäß den Kanalbedingungen in unterschiedlichen Superrahmenzyklen ändern; wobei, wenn die Kanalbedingung schlecht ist, der Kommunikationskanal von den Knoten geändert wird und die Kanalbedingung von der Paketverlustrate (Packet Loss Rate, PLR) und erneuten Übertragungszeiten ausgewertet wird; und beim Zeitschlitz-adaptiven Frequenzspringen im Superrahmen eines gebündelten WSN Zeitschlitze einer Intra-Bündel-Kommunikationsdauer den Kommunikationskanal gemäß der Kanalbedingung ändern; wobei, wenn die Kanalbedingung schlecht ist, der Knoten den Kommunikationskanal ändert; wobei die Kanalbedingung von der PLR und erneuten Übertragungszeiten ausgewertet wird;
iii) der Bakenrahmen das Format des Bakenrahmens in der MAC-Schicht IEEE 802.15.4 annimmt und die Nutzlast des Bakenrahmens erweitert wird, wobei die erweiterte Bakenrahmen-Nutzlast eine Bündel-Markierung, absolute Zeitschlitzzahl und den Kanal umfasst, der während der Bakendauer und der aktiven Dauer in dem nächsten Superrahmenzyklus verwendet wird.

2. Verfahren nach Anspruch 1, wobei
vor dem zweistufigen adaptiven Frequenzspringen die Kanalbedingung gemessen wird;
die Kanalmessung dazu verwendet wird, die Kanalbedingung dem Sink-Knoten und dem Bündel-Einstiegsknoten anzubieten, dem Sink-Knoten und dem Bündel-Einstiegsknoten bei der Zuteilung eines Kommunikationskanals zu helfen;
ein Bündel-Mitgliedsknoten oder ein Bündel-Einstiegsknoten eine oder mehrere Kanalbedingungen messen kann und die statistischen Informationen an den Bündel-Einstiegsknoten oder den Sink-Knoten berichten kann; und
der Bündel-Mitgliedsknoten das Messergebnis, das aus Bündel-Mitgliedsknoten gesammelt wird, an Bündel-Einstiegsknoten überträgt, und ein Bündel-Einstiegsknoten die aus sich selbst und aus den Bündel-Mitgliedsknoten gesammelte Kanalbedingung an den Sink-Knoten überträgt.

3. Verfahren nach Anspruch 2,wobei
während des Vorgangs der Kanalmessung jeder Knoten die Bedingungen aller Kanäle erfasst, die für die Kommunikation mit dem Knoten in der Messdauer verwendet werden;
die erfassten Leistungsinformationen eine Paketverlustrate und erneute Übertragungszeiten umfassen; und
die Paketverlustrate von der Anzahl der Bestätigungsrahmen und der Anzahl von übertragenen Paketen bestimmt wird.

4. Verfahren nach Anspruch 1, wobei der Realisierungsvorgang von PAFH wie folgt ist:
(1) zunächst teilt der Sink-Knoten Kanäle für die Bakendauer, die Konfliktzugangsdauer und die konfliktfreie Dauer eines jeden Bündel-Einstiegsknotens zu; wenn ein Bündel mehr als einen verfügbaren Kanal aufweist, wählt der Bündel-Einstiegsknoten einen Kanal zur Verwendung und kennzeichnet andere Kanäle als alternative Kanäle;
(2) der Bündel-Einstiegsknoten beurteilt die Vorgangsbeendigung des Systems; wenn das Vorgangssystem beendet wird, sollte das Programm beendet werden; anderenfalls werden die nachfolgenden Schritte durchgeführt;
(3) der Bündel-Einstiegsknoten initialisiert periodisch die Statistik der Kanalbedingungen;
(4) der Bündel-Einstiegsknoten erfasst die Kanalbedingungen, die durch ihn selbst und Bündel-Mitgliedsknoten gemessen werden;
(5) der Bündel-Einstiegsknoten bestimmt, ob die Zeit in dem PAHF-Kanalmesszyklus liegt; wenn nicht, werden die folgenden Schritte durchgeführt;
(6) der Bündel-Einstiegsknoten bestimmt, ob die Paketverlustrate eines derzeit verwendeten Kanals größer ist als eine vorgegebene Schwelle;
wenn die Paketverlustrate eines derzeit verwendeten Kanals nicht geringer als die vorgegebene Schwelle ist, berichtet der Bündel-Einstiegsknoten die Bedingung des vorherigen Kanals an den Sink-Knoten;
(7) der Bündel-Einstiegsknoten bestimmt, ob es einen alternativen Kanal gibt; wenn ja, schaltet der Bündel-Einstiegsknoten auf den alternativen Kanal um;
(8) der Bündel-Einstiegsknoten sendet den nächsten Kanal, der von Bündel-Mitgliedsknoten in der Bakendauer, der Konfliktzugangsdauer und der konfliktfreien Dauer verwendet wird, des nächsten Superrahmenzyklus unter Verwendung des Bakenrahmens;
(9) die Bündel-Einstiegsknoten und die Bündel-Mitgliedsknoten machen sich den ersetzten Kanal zu Nutze, um miteinander zu kommunizieren; und
(10) kehren zum System zurück, um zu bestimmen, ob der Vorgang des Systems beendet werden sollte.

5. Verfahren nach Anspruch 4, wobei,
wenn es keinen alternativen Kanal gibt, der Sink-Knoten Kanäle für den zugehörigen Bündel-Einstiegsknoten erneut zuteilt; und
der Bündel-Einstiegsknoten den nächsten Kanal, der von Bündel-Mitgliedsknoten in der Bakendauer, der Konfliktzugangsdauer und der konfliktfreien Dauer verwendet wird, des nächsten Superrahmenzyklus unter Verwendung des Bakenrahmens sendet.

6. Verfahren nach Anspruch 4, wobei,
wenn die Paketverlustrate eines derzeit verwendeten Kanals geringer als die vorgegebene Schwelle ist, das Programm zum System zurückkehrt, um zu bestimmen, ob der Vorgang des Systems beendet werden sollte;
wenn die Zeit in dem PAHF-Kanalmesszyklus liegt, Zurückkehren zu dem folgenden Schritt: der Bündel-Einstiegsknoten die Kanalbedingungen erfasst, die von ihm selbst und von Bündel-Mitgliedsknoten gemessen werden; und
wenn das Vorgangssystem beendet wird, das Programm beendet werden sollte.

7. Verfahren nach Anspruch 4, wobei der Bündel-Einstiegsknoten den nächsten Kanal, der von Bündel-Mitgliedsknoten in der Bakendauer, der Konfliktzugangsdauer und der konfliktfreien Dauer verwendet wird, des nächsten Superrahmenzyklus unter Verwendung des Bakenrahmens sendet, wobei
die erweiterte Bakenrahmen-Nutzlast IEEE 802.15.4 MAC dazu verwendet wird, den Kanal vorauszusagen, der in dem nächsten Superrahmenzyklus verwendet wird.

8. Verfahren nach Anspruch 1, wobei das TAFH die folgenden Parameter umfasst: eine Kanalumschaltungsschwelle, die Anzahl von verwendbaren Kanälen für eine Intra-Bündel-Kommunikation und eine Anordnung zum Speichern aller Kommunikationskanäle, die von dem Sink-Knoten dem Bündel-Einstiegsknoten und dem Bündel-Mitgliedsknoten zugeteilt wird.

9. Verfahren nach Anspruch 1, wobei der Realisierungsvorgang des TAFH wie folgt abläuft:
(1) Initialisieren der Kanalzuteilung: der Sink-Knoten teilt vorab n-Kanäle jedem Bündel-Mitgliedsknoten zu, die in einer Anordnung erfasst sind, um alle Kommunikationskanäle zu speichern, die von dem Sink-Knoten dem Bündel-Einstiegsknoten und dem Bündel-Mitgliedsknoten zugeteilt wird; wobei einer dieser Kanäle als derzeit verfügbarer Kanal gekennzeichnet ist und andere als alternative Kanäle gekennzeichnet sind;
(2) Beurteilen der Vorgangsbeendigung des Systems: wenn das Vorgangssystem beendet wird, sollte das Programm beendet werden; anderenfalls werden die folgenden Schritte durchgeführt;
(3) die Statistiken von Kanalbedingungen im Bündel-Einstiegsknoten und den Bündel-Mitgliedsknoten werden auf 0 eingestellt;
(4) wenn der Bündel-Einstiegsknoten und der Bündel-Mitgliedsknoten miteinander kommunizieren, erfassen beide die Anzahl von Übertragungsblockierungen, während der derzeit verfügbare Kanal verwendet wird;
(5) Bestimmen, ob die erste Kommunikation in dem derzeit verfügbaren Kanal erfolgreich ist; wenn sie erfolgreich ist, sollten der Bündel-Einstiegsknoten und der Bündel-Mitgliedsknoten die Kanal-Übertragungsblockierungszählung synchronisieren und die Kanal-Übertragungsblockierungszählung auf den kleineren Wert einstellen;
(6) Bestimmen, ob die statistische Kanal-Übertragungsblockierungszählung entweder des Bündel-Einstiegsknotens oder des Bündel-Mitgliedsknotens dem Wert "Kanalumschaltungsschwelle +2" entspricht; wenn nicht, geht das Programm auf den nächsten Schritt über;
(7) Bestimmen, ob die statistische Kanal-Übertragungsblockierungszählung eines übertragenden Knotens der Kanalumschaltungsschwelle entspricht; wenn die statistische Kanal-Übertragungsblockierungszählung des übertragenden Knotens der Kanalumschaltungsschwelle entspricht, sendet der übertragende Knoten die Kanalumschaltungsbenachrichtigung, die von Paketen an einen empfangenden Knoten übertragen wird; und
(8) Bestimmen, ob die Kanalumschaltungsbenachrichtigung erfolgreich gesendet wird; wenn die Kanalumschaltungsbenachrichtigung erfolgreich gesendet wird, wählt der empfangende Knoten ordnungsgemäß den nächsten Kanal aus der Anordnung zur Speicherung aller Kommunikationskanäle aus, die von dem Sink-Knoten dem Bündel-Einstiegsknoten und dem Bündel-Mitgliedsknoten zugeteilt wird, um den Kommunikationskanal zu ersetzen, und sendet eine Bestätigung zurück; und Zurückkehren zum System zur Bestimmung, ob der Vorgang des Systems beendet werden sollte.

## Revendications

1. Procédé à sauts de fréquence adaptatifs à deux stades pour un réseau de capteurs sans fil WSN en grappe, comprenant les étapes suivantes :
a) construire un réseau de capteurs sans fil en grappe ; le réseau de capteurs sans fil en grappe comprenant les trois types de noeuds suivants : un noeud récepteur, un noeud d'en-tête de grappe et un noeud d'élément de grappe ; et dans lequel des noeuds d'en-tête de grappe et des noeuds d'élément de grappe constituent des grappes, un noeud d'élément de grappe communiquant avec un seul noeud d'en-tête de grappe, mais pas l'un avec l'autre et un noeud d'en-tête de grappe communique avec le noeud récepteur et d'autres noeuds d'en-tête de grappe ;
b) définir une structure de supertrame sur la base de la norme IEEE 802.15.4 ;
c) exécuter un mécanisme à sauts de fréquence **caractérisé en ce que** le mécanisme à sauts de fréquence est un mécanisme à sauts de fréquence adaptatifs à deux stades, et
(i) ladite structure de supertrame est une structure de supertrame étendue comprenant une période de trame balise, une période d'accès avec conflit, une période d'accès sans conflit et une période inactive comprenant une période de communication intra-grappe, une période de communication inter-grappes et une période de sommeil ; dans lequel la période de trame balise est utilisée pour une synchronisation d'intervalles de temps et une publication d'informations de supertrame ; la période d'accès avec conflit est utilisée pour l'ajout de noeuds et la gestion intra-grappe, qui réalise un contrôle d'accès au support au moyen d'un algorithme d'accès multiple par détection de porteuse et évitement de collision d'intervalles de temps ; la période sans conflit est utilisée pour les communications d'urgence et les communications entre les noeuds d'élément de grappe et les noeuds d'en-tête de grappe mobiles, qui sont distribuées par les noeuds d'en-tête de grappe eux-mêmes ; dans la période d'accès sans conflit, la communication est interrompue en utilisant le mécanisme d'accès multiple par répartition dans le temps ; la période de communication intra-grappe est l'extension de la période sans conflit et est utilisée pour la communication intra-grappe ; la période de communication inter-grappes est utilisée pour la communication et la gestion inter-grappes ; et la période de communication intra-grappe et la période de communication inter-grappes utilisent toutes les deux le TDMA pour interrompre la communication ;
(ii) ledit saut de fréquence adaptatif à deux stades comprend un saut de fréquence adaptatif de période PAFH de premier stade et un saut de fréquence adaptatif d'intervalle de temps TAFH de deuxième stade ; dans lequel en ce qui concerne le saut de fréquence adaptatif de période, dans la supertrame d'un WSN en grappe, la période de balise, la période d'accès avec conflit et la période d'accès sans conflit utilisent le même canal dans le même cycle de supertrame et changent les canaux en fonction des états de canal dans différents cycles de supertrame ; dans lequel lorsque l'état de canal est mauvais, le canal de communication est changé par les noeuds et l'état de canal est évalué par un taux de perte de paquets PLR et des temps de retransmission ; et
concernant le saut de fréquence adaptatif d'intervalles de temps, dans la supertrame d'un WSN en grappe, des intervalles de temps de période de communication intra-grappe changent le canal de communication en fonction de l'état de canal ; dans lequel lorsque l'état de canal est mauvais ; le noeud change le canal de communication ; l'état de canal est évalué par le PLR et des temps de retransmission ;
(iii) la trame balise adopte le format de la trame balise dans la couche MAC IEEE 802.15.4 et la charge utile de la trame balise est étendue, ladite charge utile de la trame balise étendue comprenant un identifiant de grappe, un nombre absolu d'intervalles de temps et le canal utilisé durant la période de balise et la période active dans le cycle de supertrame suivant.

2. Procédé selon la revendication 1, dans lequel
avant le saut de fréquence adaptatif à deux stades, l'état de canal est mesuré ;
la mesure de canal est utilisée pour offrir l'état de canal au noeud récepteur et au noeud d'en-tête de grappe, aidant ainsi le noeud récepteur et le noeud d'en-tête de grappe à attribuer un canal de communication ;
un noeud d'élément de grappe ou un noeud d'en-tête de grappe peut mesurer un ou plusieurs états de canal, et indiquer les informations statistiques au noeud d'en-tête de grappe ou au noeud récepteur ; et
le noeud d'élément de grappe transmet le résultat de mesure collecté à partir des noeuds d'élément de grappe vers les noeuds d'en-tête de grappe, et un noeud d'en-tête de grappe transmet l'état de canal collecté à partir de lui-même et à partir des noeuds d'élément de grappe au noeud récepteur.

3. Procédé selon la revendication 2, dans lequel
dans le processus de mesure de canal, chaque noeud enregistre les états de tous les canaux qui sont utilisés pour la communication avec le noeud dans la période de mesure ;
les informations de performance enregistrées comprennent le taux de perte de paquets et les temps de retransmission ; et
le taux de perte de paquets est déterminé par le nombre de trames d'accusé de réception et le nombre de paquets transmis.

4. Procédé selon la revendication 1, dans lequel le processus de réalisation du PAFH est comme suit :
(1) tout d'abord, le noeud récepteur attribue des canaux à chaque période de balise, période d'accès avec conflit et période d'accès sans conflit du noeud d'en-tête de grappe ; si une grappe présente plus d'un canal disponible, le noeud d'en-tête de grappe sélectionne un canal à utiliser et identifie d'autres canaux comme canaux alternatifs ;
(2) le noeud d'en-tête de grappe détermine l'achèvement de l'opération du système ; si le système d'exploitation est interrompu, le programme doit être arrête sinon, les étapes suivantes sont exécutées ;
(3) le noeud d'en-tête de grappe initialise périodiquement les statistiques des états de canal ;
(4) le noeud d'en-tête de grappe enregistre les états de canal mesurés par lui-même et les noeuds d'élément de grappe ;
(5) le noeud d'en-tête de grappe détermine si le temps est compris dans le cycle de mesure du canal PAHF ; si ce n'est pas le cas, les étapes suivantes sont exécutées ;
(6) le noeud d'en-tête de grappe détermine si le taux de perte de paquets du canal actuellement utilisé est supérieur à un seuil prédéterminé ;
si le taux de perte de paquets du canal actuellement utilisé n'est pas inférieur au seuil prédéterminé, le noeud d'en-tête de grappe indique l'état du précédent canal au noeuds récepteur ;
(7) le noeud d'en-tête de grappe détermine s'il existe un canal alternatif ; si tel est le cas, le noeud d'en-tête de grappe bascule vers le canal alternatif ;
(8) le noeud d'en-tête de grappe diffuse le canal suivant utilisé par les noeuds d'élément de grappe dans la période de balise, la période d'accès avec conflit et la période sans conflit du cycle de supertrame suivant en utilisant la trame balise ;
(9) les noeuds d'en-tête de grappe et les noeuds d'élément de grappe profitent du canal remplacé pour communiquer les uns avec les autres ; et
(10) demander au système de déterminer si le fonctionnement du système doit être interrompu.

5. Procédé selon la revendication 4, dans lequel
s'il n'y a pas de canal alternatif, le noeud récepteur attribue à nouveau des canaux pour le noeud d'en-tête de grappe associé ; et
le noeud d'en-tête de grappe diffuse le canal suivant utilisé par les noeuds d'élément de grappe dans la période de balise, la période d'accès avec conflit et la période sans conflit du cycle de supertrame suivant en utilisant la trame balise.

6. Procédé selon la revendication 4, dans lequel
si le taux de perte de paquets du canal actuellement utilisé est inférieur au seuil prédéterminé, le programme demande au système de déterminer si le fonctionnement du système doit être interrompu ;
si le temps est dans le cycle de mesure du canal PAHF, retourner à l'étape : le noeud d'en-tête de grappe enregistre les états de canal mesurés par lui-même et les noeuds d'élément de grappe ; et
si le système d'exploitation est interrompu, le programme doit être arrêté.

7. Procédé selon la revendication 4, dans lequel le noeud d'en-tête de grappe diffuse le canal suivant utilisé par les noeuds d'élément de grappe dans la période de balise, la période d'accès avec conflit et la période sans conflit du cycle de supertrame suivant en utilisant la trame balise, dans lequel la charge utile de la trame balise étendue de la norme MAC IEEE 802.15.4 est utilisée pour prévoir le canal utilisé dans le cycle de supertrame suivant.

8. Procédé selon la revendication 1, dans lequel le TAFH comprend les paramètres suivants : un seuil de commutation de canal, le nombre de canaux utilisables pour la communication intra-grappe, et un réseau destiné à stocker tous les canaux de communication, qui est attribué par le noeud récepteur au noeud d'en-tête de grappe et au noeud d'élément de grappe.

9. Procédé selon la revendication 1, dans lequel le processus de réalisation du TAFH est comme suit :
(1) initialiser l'attribution de canaux: le noeud récepteur attribue préalablement n canaux pour chaque noeud d'élément de grappe, qui sont enregistrés dans un réseau destiné à stocker tous les canaux de communication, qui est attribué par le noeud récepteur au noeud d'en-tête de grappe et au noeud d'élément de grappe ; un de ces canaux représente un canal actuellement disponible et les autres représentent des canaux alternatifs ;
(2) déterminer l'achèvement de l'opération du système : si le système d'exploitation est interrompu, le programme doit être arrêté ; sinon, les étapes suivantes sont exécutées ;
(3) les statistiques des états de canal dans le noeud d'en-tête de grappe et les noeuds d'élément de grappe sont réglées sur 0 ;
(4) lorsque le noeud d'en-tête de grappe et le noeud d'élément de grappe communiquent l'un avec l'autre, tous les deux enregistrent le nombre d'échecs de transmission tout en utilisant le canal actuellement disponible ;
(5) déterminer si la première communication sur le canal actuellement disponible est un succès ; si c'est le cas, le noeud d'en-tête de grappe et le noeud d'élément de grappe doivent synchroniser le nombre d'échecs de transmission de canal et régler le nombre d'échecs de transmission de canal sur la valeur la plus faible ;
(6) déterminer si le nombre d'échecs de transmission de canal statistique du noeud d'en-tête de grappe ou du noeud d'élément de grappe est égal à la valeur « seuil de commutation de canal +2 » ; si tel n'est pas le cas, le programme passe à l'étape suivante ;
(7) déterminer si le nombre d'échecs de transmission de canal statistique d'un noeud de transmission est égal au seuil de commutation de canal ; si le nombre d'échecs de transmission de canal statistique du noeud de transmission est égal au seuil de commutateur de canal, le noeud de transmission envoie l'indication de commutation de canal qui est transportée par des paquets à un noeud de réception ; et
(8) déterminer si l'indication de commutation de canal est envoyée avec succès ; si l'indication de commutation de canal est envoyée avec succès, le noeud de réception sélectionne de manière ordonnée le canal suivant dans le réseau destiné à stocker tous les canaux de communication, qui est attribué par le noeud récepteur au noeud d'en-tête de grappe et au noeud d'élément de grappe, pour remplacer le canal de communication, et renvoie un accusé de réception ; et demander au système de déterminer si le fonctionnement du système doit être interrompu.
